# EUROPÄISCHE PATENTSCHRIFT

(11) **EP 0 603 547 B1**
(45) Veröffentlichungstag und Bekanntmachung des Hinweises auf die Patenterteilung: **13.03.1996**
(21) Anmeldenummer: 93118606.8
(22) Anmeldetag: 18.11.1993
(51) Int. Cl.: F16L 3/22, B65D 63/10

(54) **Kabelband aus Kunststoff**
Plastic bundle tie
Collier de serrage en matière plastique

(30) Priorität: 23.12.1992 FR 9215610
(43) Veröffentlichungstag der Anmeldung: 29.06.1994
(73) Patentinhaber: TRW CARR FRANCE, F-67340 Ingwiller (FR)
(72) Erfinder: Klein, Jean-Luc René Georges, F-67350 Ringendorf (FR)
(74) Vertreter: Schieschke, Klaus, Dipl.-Ing.

(56) Entgegenhaltungen:
- DE-A- 2 532 062
- GB-A- 2 135 382

## Beschreibung

Die Erfindung bezieht sich auf ein Kabelband nach dem Oberbegriff des Anspruchs 1 gemäß DE-A-2 532 062.

Als Stand der Technik ist bereits auch ein derartiges Kabelband bekannt, welches so ausgebildet ist, daß oberhalb des Rastbereichs das Freigabeelement angeordnet und mit diesem über dünne Stege verbunden ist (DE-OS 20 45 300). Durch Beaufschlagung des Freigabeelements wird das jeweilige, mit der Rastnase zusammenwirkende Rastelement des Bandbereichs aus seiner Verriegelung gelöst, so daß sich das Kabelband öffnen läßt. Auch nach dem Öffnen des Kabelbandes weist bei dieser bekannten Konstruktion der Rastbereich einen allseitig geschlossenen Kanal auf, welcher infolge seiner erforderlichen Maßhaltigkeit eine kostenaufwendige Herstellung erfordert.

Dieselben Nachteile ergeben sich bei einer ähnlichen bekannten Konstruktion (DE-2 532 062), bei der eine über ein Filmscharnier klappbare Verschlußklappe mit Rastzähnen in die Aussparung eines halb bzw. allseitig geschlossenen Kanals und in das darin geführte Band mit seiner Verzahnung eingreift.

Bei einer anderen bekannten Konstruktion ist der Rastbereich über ein dünnes Filmscharnier mit der Bodenplatte verbunden und wird bei Eingriff mit dem jeweiligen Rastelement des Bandbereiches nach aufwärts geschwenkt, um die Haltewirkung zwischen Rastbereich einerseits und Rastelement andererseits zu verbessern (DE-OS 18 10 515). Auch bei dieser Konstruktion ist der Rastbereich mit Rastnase als geschlossener Kanal ausgebildet.

Weiterer Stand der Technik ist ein Kabelband, bei welchem die Rastnase hakenförmig ausgebildet ist und einer federnden Gegenrast gegenüberliegt (US-PS 4 001 898). Bei beiden vorgenannten Konstruktionen ist es schwierig, den einmal im Rastbereich verriegelten Bandbereich auf einfache Weise zu lösen, so daß ein Öffnen des Kabelbandes nicht ohne weiteres bewerkstelligt werden kann.

Demgegenüber liegt der vorliegenden Erfindung die Aufgabe zugrunde, ausgehend von dem eingangs genannten Stand der Technik ein Kabelband zu schaffen, welches bei einfacherem Aufbau eine verbesserte Handhabung beim Öffnen und Schließen ermöglicht.

Diese Aufgabe wird erfindungsgemäß durch die Merkmale des Anspruchs 1 gelöst.

In weiterer Ausgestaltung der Erfindung kann der Steg H-förmig ausgebildet sein, wobei am Querschenkel die Rastnase lagert und die Endbereiche der beiden Längsschenkel über das erste Filmscharnier mit der Bodenplatte verbunden sind. An den einen Längsschenkel des Steges kann die erste Seitenwand und an den anderen Längsschenkel über das zweite Filmscharnier die zweite Seitenwand anschließen.

Die zweite Seitenwand und das Freigabeelement können mindestens eine Ausnehmung aufweisen, in welche in Schließstellung eine Rast am vorderen Bereich der ersten Seitenwand und eine Arretiernase der Bodenplatte einlagerbar sind. Es ergibt sich damit eine einwandfreie Verriegelung der einzelnen Elemente des Rastbereichs, wobei nach Beendigung der Funktion des Kabelbandes dieses durch Öffnen des Rastbereichs wieder in die Offenstellung überführt werden kann.

Hierzu kann in Schließstellung des Rastbereichs das vordere Ende des Freigabeelements die Außenfläche der ersten Seitenwand überragen, so daß es möglich ist, durch Abheben dieses überragenden Teils die verschiedenen Arretierungen wieder zu lösen und den gesamten Rastbereich aus der Schließstellung in die Offenstellung zu überführen.

In weiterer Ausgestaltung der Erfindung kann die Arretiernase seitlich an einer mit der Bodenplatte verbundenen Säule angeordnet sein. In Schließstellung des Rastelements steht hierbei die mit einem spitzwinkligen Abschlußbereich versehene Säule der Rastnase gegenüber und bildet eine Gegenrast für die Rastelemente des Bandbereichs. Darüber hinaus ist diese Gegenrast in der Lage, die Zugkraft des Bandbereichs aufzunehmen und die elastische Verbindung zu entlasten.

Nach einem anderem Merkmal der Erfindung kann unterhalb des Querschenkels eine Einführschräge an diesen angeformt sein, welche in Schließstellung in eine in die Bodenplatte eingeformte Ausnehmung ragen kann.

Die Erfindung wird nachfolgend anhand eines in der Zeichnung dargestellten Ausführungsbeispiels näher beschrieben. In der Zeichnung zeigen:
- Fig. 1: eine Seitenansicht des Kabelbandes, teils gebrochen, teils geschnitten in Offenstellung I;
- Fig. 2: eine Draufsicht auf das Kabelband nach Fig. 1;
- Fig. 3: einen Schnitt nach der Linie III-III in Fig. 2;
- Fig. 4: den in Schließstellung II überführten Rastbereich des Kabelbandes nach den Figuren 1 - 3.

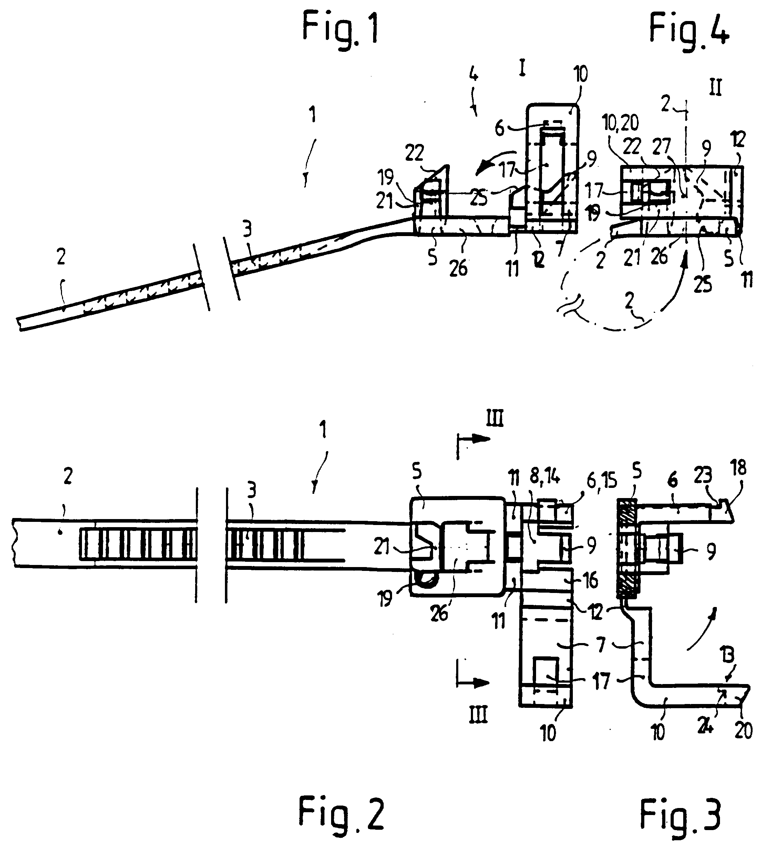

Das in den Figuren 1 bis 4 dargestellte Kabelband 1 ist aus Kunststoff einstückig hergestellt und besteht im wesentlichen aus einem Bandbereich 2 sowie einem Rastbereich 4. Der Bandbereich 2 ist mit einer Anzahl von Rastelementen 3 versehen, welche stufen- oder leiterartig ausgebildet sein können.

Der Rastbereich 4 umfaßt im wesentlichen eine Bodenplatte 5 und zwei Seitenwände 6 und 7 sowie einen dazwischenliegenden Steg 8 mit Rastnase 9. Diese Rastnase 9 dient zum Eingriff in eines der Rastelemente 3 bei Arretierung des Bandbereichs 2 im Rastbereich 4. Wie aus Fig. 3 ersichtlich, ist an die Seitenwand 7 ein Freigabeelement 10 starr angeformt, welches im rechten Winkel zu der zweiten Seitenwand 7 steht.

Die Bodenplatte 5 und die erste Seitenwand 6 sind über ein erstes Filmscharnier 11, 11 miteinander verbunden. Ein zweites Filmscharnier 12 verbindet die zweite Seitenwand 7 mit dem Steg 8. An diese zweite Seitenwand 7 schließt rechtwinklig starr das Freigabeelement 10 an. Dieses Freigabeelement 10 ist im vorderen Bereich über eine Verrastung 13 mit einer Rast 18 im vorderen Bereich der ersten Seitenwand 6 verbindbar.

Aus dem Vergleich der Figuren 1 und 4 ist ersichtlich, daß der Rastbereich 4 aus einer Offenstellung I in eine durch das Freigabeelement 10 und weitere Verrastungen verriegelbare Schließstellung II überführbar ist. Durch Betätigung des Freigabeelements 10 besteht die Möglichkeit, den Rastbereich 4 aus der Schließstellung II gemäß Fig. 4 in die Offenstellung I gemäß Fig. 1 zu überführen. Damit ist eine Wiederverwendungsmöglichkeit des erfindungsgemäßen Kabelbandes 1 gegeben, da die Filmscharniere 11 und 12 jeweils beschädigungsfrei die Überführung der einzelnen Teile des Rastbereichs 4 aus der Offen- in die Schließstellung und umgekehrt ermöglichen.

Der Steg 8, welcher mit der ersten Seitenwand 6 verbunden ist, ist H-förmig ausgebildet, wobei am Querschenkel 14 die Rastnase 9 lagert. Der Querschenkel 14 verbindet zwei Längsschenkel 15 und 16, welche ihrerseits nach Fig. 1 und 2 in ihren Endbereichen über das erste Filmscharnier 11, 11 mit der Bodenplatte 5 verbunden sind.

An den Längsschenkel 15 des Steges 8 schließt die erste Seitenwand 6 an. An den anderen Längsschenkel 16 schließt über das zweite Filmscharnier 12 die zweite Seitenwand 7 an.

Das Freigabeelement 10 und die zweite Seitenwand 7 weisen hierbei nach Fig. 1 und 2 eine schlitzartige Ausnehmung 17 auf. Diese Ausnehmung 17 dient dazu, in Schließstellung II nach Fig. 4 die Rast 18 am vorderen Bereich der ersten Seitenwand arretiert aufzunehmen. Gleichzeitig lagert sich eine Arretiernase 19 der Bodenplatte 5 in die Ausnehmung 17.

Diese Arretiernase 19 ist seitlich an einer mit der Bodenplatte 5 verbundenen Säule 21 angeordnet. In Schließstellung II steht die mit einem spitzwinkligen Abschlußbereich 22 nach Fig. 1 versehene Säule 21 der Rastnase 9 gegenüber und bildet eine Gegenrast für die Rastelemente 3 des Bandbereichs 2. Diese Gegenrast ist in der Lage, die Zugkraft des Bandbereichs 2 aufzunehmen und die elastischen Verbindungen zwischen der Rastnase 9 und den Rastelementen 3 zu entlasten.

Aus Fig. 3 ist ersichtlich, daß die Rast 18 im mittleren Bereich der ersten Seitenwand 6 angeordnet ist und eine Schulter 23 nach Fig. 3 aufweist. Diese Schulter 23 kann sich in eine Gegenschulter 24 der Ausnehmung 17 des Freigabeelements 10 einlagern.

Die Bodenplatte 5 weist nach Fig. 2 eine Ausnehmung 26 auf, in welche sich eine Einführschräge 25 in Schließstellung II einlagern kann, welche unterhalb des Querschenkels 14 an diesen angeformt ist.

Nach Fig. 1, 2 und 3 liegt der Rastbereich 4 in Offenstellung I vor. Zur Überführung des Rastbereichs 4 von dieser Offenstellung I in die Schließstellung II wird zunächst der zweite Schenkel 7 mit dem starr rechtwinklig daran angeformten Freigabeelement 10 um das Filmscharnier 12 nach Fig. 3 im Gegenuhrzeigersinn geschwenkt, bis sich die Schulter 23 der ersten Seitenwand 6 in der Gegenschulter 24 der Ausnehmung 17 des Freigabeelements 10 einlagert.

Damit ist der erste Montageschritt beendet: Die beiden Seitenwände 6 und 7 liegen nunmehr parallel und werden auf der einen Seite über das Freigabeelement 10 durch Schulter 23 und Gegenschulter 24 arretiert verbunden. Eine Verbindung auf der anderen Seite liegt durch den H-förmig ausgebildeten Steg 8 vor. Diese so vormontierte Einheit wird nun nach Fig. 1 im Gegenuhrzeigersinn um das Filmscharnier 11 geschwenkt, und zwar solange, bis die Schließstellung II nach Fig. 4 erreicht ist.

In dieser Schließstellung II ist die Arretiernase 19 der Säule 21 in der Ausnehmung 17 im Bereich der zweiten Seitenwand 7 eingelagert, so daß nunmehr ein geschlossener Kanal 27 bezüglich des Rastbereichs 4 nach Fig. 4 vorliegt.

Durch die Überführung des Rastbereichs 4 aus der Offenstellung I nach Fig. 1 in die Schließstellung II nach Fig. 4 weist der Rastbereich 4 nunmehr den Durchgangskanal 27 auf, in welchem die Rastnase 9 und die Säule 21 mit dem spitzwinkligen Anschlußbereich 22 ragen.

Wird nunmehr nach Fig. 4 in Pfeilrichtung der Bandbereich 2 mit seinen Rastelementen in den Durchgangskanal 27 eingeführt, so kann sich die federnde Rastnase 9 in ein bestimmtes Rastelement 3 des Bandbereichs 2 einlagern und damit z.B. ein Rohrbündel sicher umfassen. Hierbei drückt die federnde Rastnase 9 das entsprechende Rastelement 3 gegen die Säule 21, so daß eine gute Arretierung gegeben ist.

Aus Fig. 4 ist ersichtlich, daß unterhalb der Rastnase 9 der Steg 8 eine Einführschräge 25 aufweist, welche in Schließstellung II im schmaleren Bereich der Ausnehmung 26 der Bodenplatte 5 liegt. Damit wird beim Einführen des Bandbereichs 2 durch die Ausnehmung 26 der Bandbereich 2 einwandfrei in den Durchgangskanal 27 des Rastbereichs 4 in Richtung zur federnden Rastnase 9 und zur Säule 21 geführt.

Soll nun die gesamte Einheit demontiert werden, so wird nach Fig. 4 das vordere Ende 20 des Freigabeelements 10 um das Filmscharnier 12 geschwenkt. Damit löst sich die Schulter 23 der ersten Seitenwand 6 von der Gegenschulter 24 des Freigabeelements 10, so daß der Durchgangskanal 27 nicht mehr besteht und sich das betreffende Rastelement 3 des Bandbereichs 2 von der Rastnase 9 lösen kann.

Nach diesem Vorgang wird die so vordemontierende Einheit um die Filmscharniere 11 im Uhrzeigersinn geschwenkt, bis die Position nach Fig. 1 bis 3 wieder erreicht ist. Damit ist der Rastbereich 4 aus seiner Schließstellung II nach Fig. 4 in seine Offenstellung I nach Fig. 1 überführt.

Das erfindungsgemäße Kabelband 1 weist in seiner Offenstellung I keinen geschlossenen Durchgangskanal 27 im Rastbereich 4 auf; dieser Durchgangskanal 27 mit der hineinragenden Rastnase 9 wird erst dann gebildet, wenn die einzelnen, jeweils durch Filmscharniere 11, 12 miteinander verbundenen Einheiten des Rastbereichs 4 aus ihrer Offenstellung I in die Schließstellung II überführt werden. Hierzu sind lediglich zwei Montageabschnitte erforderlich.

Umgekehrt läßt sich die gesamte Einheit leicht aus einer montierten Stellung in eine demontierte Stellung überführen, in dem einfach des Freigabeelement 10 aufgeklappt wird und damit der Rastbereich 4 geöffnet ist. Damit liegt ein häufig wiederverwendbares Kabelband 1 vor, welches einfach zu montieren bzw. zu demontieren ist, andererseits jedoch hohe Kräfte aufnehmen kann und sehr funktionssicher wirkt.

## Patentansprüche

1. Kabelband aus Kunststoff, mit einem mit Rastelementen (3) versehenen Bandbereich (2),
mit einem Rastbereich (4), bestehend aus einer Bodenplatte (5) und zwei Seitenwänden (6, 7) mit einem dazwischenliegenden Steg (8) mit Rastnase (9) zum Eingriff in eines der Rastelemente (3) bei Arretierung des Bandbereichs (2) im Rastbereich (4), und
mit einem am Rastbereich (4) angeordneten Freigabeelement (10) zur Aufhebung der Arretierung,
dadurch gekennzeichnet,
daß der Rastbereich (4) mit Bodenplatte (5) und Seitenwänden (6, 7) als durch Filmscharniere (11, 12) miteinander verbundene Einheit ausgebildet ist, wobei die Bodenplatte (5) und die erste, starr mit dem Steg (8) und der Rastnase (9) verbundene Seitenwand (6) über ein erstes Filmscharnier (11, 11) und die zweite Seitenwand (7) mit dem Steg (8) über ein zweites Filmscharnier (12) verbunden sind und
daß an die zweite Seitenwand (7) rechtwinklig starr das Freigabeelement (10) anschließt, welches im vorderen Bereich über eine Verrastung (13) mit einer Rast (18) im vorderen Bereich der ersten Seitenwand (6) verbindbar ist,
wodurch der Rastbereich (4) aus einer Offenstellung (I) in eine durch das Freigabeelement (10) verriegelte Schließstellung (II) und umgekehrt überführbar ist.

2. Kabelband nach Anspruch 1,
dadurch gekennzeichnet,
daß der Steg (8) H-förmig ausgebildet ist, wobei am Querschenkel (14) die Rastnase (9) lagert und die Endbereiche der beiden Längsschenkel (15, 16) über das erste Filmscharnier (11, 11) mit der Bodenplatte (5) verbunden sind.

3. Kabelband nach Anspruch 1 und 2,
dadurch gekennzeichnet,
daß an den einen Längsschenkel (15) des Steges (8) die erste Seitenwand (6) und an den anderen Längsschenkel (16) über das zweite Filmscharnier (12) die zweite Seitenwand (7) anschließt.

4. Kabelband nach einem der vorhergehenden Ansprüche,
dadurch gekennzeichnet,
daß die zweite Seitenwand (7) und das Freigabeelement (10) mindestens eine Ausnehmung (17) aufweisen, in welche in Schließstellung (II) die Rast (18) am vorderen Bereich der ersten Seitenwand (6) und eine Arretiernase (19) der Bodenplatte (5) einlagerbar sind.

5. Kabelband nach Anspruch 4,
dadurch gekennzeichnet,
daß die Arretiernase (19) seitlich an einer mit der Bodenplatte (5) verbundenen Säule (21) angeordnet ist.

6. Kabelband nach Anspruch 5,
dadurch gekennzeichnet,
daß in Schließstellung (II) des Rastbereichs (4) die mit einem spitzwinkligen Abschlußbereich (22) versehene Säule (21) der Rastnase (9) gegenübersteht und eine Gegenrast für die Rastelemente (3) des Bandbereichs (2) bildet.

7. Kabelband nach Anspruch 4,
dadurch gekennzeichnet,
daß die Rast (18) im mittleren Bereich der ersten Seitenwand (6) angeordnet und mit einer Schulter (23) in eine Gegenschulter (24) der Ausnehmung (17) des Freigabeelements (10) einlagerbar ist.

8. Kabelband nach Anspruch 2,
dadurch gekennzeichnet,
daß unterhalb des Querschenkels (14) eine Einführschräge (25) an diesen angeformt ist.

9. Kabelband nach Anspruch 8,
dadurch gekennzeichnet,
daß in Schließstellung (II) die Einführschräge (25) in eine in die Bodenplatte (4) eingeformte Ausnehmung (26) ragt.

## Claims

1. Plastics band clamp, having a band region (2) provided with latch elements (3),
having a latch region (4), comprising a base plate (5) and two side walls (6, 7) with an intermediate web (8) containing a latch boss (9) for engagement in one of the latch elements (3) when the band region (2) is detained in the latch region (4), and
having a release element (10), disposed on the latch region (4), for lifting the detention,
characterized
in that the latch region (4) with base plate (5) and side walls (6, 7) is configured as a unit which is joined together by film hinges (11, 12), the base plate (5) and the first side wall (6), which is rigidly connected to the web (8) and the latch boss (9), being connected by a first film hinge (11, 11), and the second side wall (7) being connected to the web (8) by a second film hinge (12),
in that the second side wall (7) is rigidly adjoined at right angles by the release element (10), which can be connected in the front region by a latch mechanism (13) to a catch (18) in the front region of the first side wall (6), thereby enabling the latch region (4) to be transferred out of an open setting (I) into a closed setting (II), which is locked by the release element (10), and vice versa.

2. Band clamp according to Claim 1, characterized in that the web (8) is of H-shaped configuration, the latch boss (9) being mounted on the transverse member (14) and the end regions of the two longitudinal members (15, 16) being connected to the base plate (5) by the first film hinge (11, 11).

3. Band clamp according to Claim 1 and 2, characterized in that the one longitudinal member (15) of the web (8) is adjoined by the first side wall (6) and the other longitudinal member (16) is adjoined, via the second film hinge (12), by the second side wall (7).

4. Band clamp according to one of the preceding claims, characterized in that the second side wall (7) and the release element (10) have at least one recess (17), in which, in the closed setting (II), the catch (18) on the front region of the first side wall (6) and a detention boss (19) of the base plate (5) are able to be embedded.

5. Band clamp according to Claim 4, characterized in that the detention boss (19) is disposed laterally on a column (21) connected to the base plate (5).

6. Band clamp according to Claim 5, characterized in that, in the closed setting (II) of the latch region (4), the column (21), which is provided with an acute-angled extremity region (22), stands opposite the latch boss (9) and forms a counter-catch for the latch elements (3) of the band region (2).

7. Band clamp according to Claim 4, characterized in that the catch (18) is disposed in the middle region of the first side wall (6) and can be embedded with a shoulder (23) into a counter-shoulder (24) of the recess (17) in the release element (10).

8. Band clamp according to Claim 2, characterized in that beneath the transverse member (14) there is moulded onto it a lead-in slope (25).

9. Band clamp according to Claim 8, characterized in that, in the closed setting (II), the lead-in slope (25) juts into a recess (26) moulded into the base plate (4).

## Revendications

1. Collier de serrage en matière plastique avec une zone de bande (2) munie d'éléments de cran (3),
avec une zone de cran (4), constituée par une plaque de fond (5) et deux parois latérales (6, 7) avec une aile intercalée (8) et un talon de cran (9) pour l'engagement dans l'un des éléments de cran (3) lors du blocage de la zone de bande (2) dans la zone de cran (4), et
avec un élément de libération (10) disposé dans la zone de cran (4) pour supprimer le blocage,
caractérisé en ce que,
la zone de cran (4) avec la plaque de fond (5) et les parois latérales (6, 7) est conçue sous forme d'une unité raccordée par des charnières pelliculaires (11, 12), la plaque de fond (5) et la première paroi latérale (6) raccordée rigidement avec l'aile (8) et le talon (9) sont raccordées par l'intermédiaire d'une première charnière pelliculaire (11, 11) et la seconde paroi latérale (7) avec l'aile (8) par l'intermédiaire d'une seconde charnière pelliculaire (12) et
en ce que l'élément de libération (10) se raccorde sur la seconde paroi latérale (7) rigidement à angle droit, élément de libération qui dans la zone avant peut être raccordé par l'intermédiaire d'un encliquetage (13) avec un cran (18) dans la zone avant de la première paroi latérale (6), de sorte que la zone de cran (4) peut passer à partir d'une position ouverte (I) dans une position de fermeture (II) verrouillée par l'élément de libération (10) et vice versa.

2. Collier de serrage selon la revendication 1, caractérisé en ce que l'aile (8) est conçue en forme de H, le talon (9) reposant sur la branche transversale (14) et les zones d'extrémité des deux branches longitudinales (15, 16) étant raccordées par l'intermédiaire de la première charnière pelliculaire (11, 11) à la plaque de fond (5).

3. Collier de serrage selon la revendication 1 et 2, caractérisé en ce que sur l'une des branches longitudinales (15) de l'aile (8) se raccorde la première paroi latérale (6) et sur l'autre branche longitudinale (16) se raccorde la deuxième paroi latérale par l'intermédiaire de la seconde charnière pelliculaire (12).

4. Collier de serrage selon l'une des revendications précédentes, caractérisé en ce que la seconde paroi latérale (7) et l'élément de libération (10) présentent au moins un évidement (17) dans lequel peut être logé en position de fermeture (2) le cran (18) sur la zone avant de la première paroi latérale (6) et un talon de blocage (19) de la plaque de fond (5).

5. Collier de serrage selon la revendication 4, caractérisé en ce que le talon de blocage (19) est disposé latéralement sur un pivot (21) raccordé à la plaque de fond (5).

6. Collier de serrage selon la revendication 5, caractérisé en ce que dans la position de fermeture (II) de la zone de cran (4) le pivot (21) muni d'une zone de fermeture (22) à angle aigu est en opposition au talon de blocage (9) et forme un contre-cran pour les éléments de cran (3) de la zone de bande (2),

7. Collier de serrage selon la revendication 4, caractérisé en ce que le cran (18) est disposé dans la zone médiane de la première paroi latérale (6) et peut être logé avec un épaulement (23) dans un contre-épaulement (24) de l'évidement (17) de l'élément de libération (10).

8. Collier de serrage selon la revendication 2, caractérisé en ce que au-dessous de la branche transversale (14) est formée une déclivité d'introduction (25).

9. Collier de serrage selon la revendication 8, caractérisé en ce que dans la position de fermeture (II) la déclivité d'introduction (25) fait saillie dans un évidement (26) formé dans la plaque de fond (4).
